# EUROPÄISCHE PATENTSCHRIFT

(11) **EP 2 108 424 B1**
(45) Veröffentlichungstag und Bekanntmachung des Hinweises auf die Patenterteilung: **08.01.2014**
(21) Anmeldenummer: 09156385.8
(22) Anmeldetag: 27.03.2009
(51) Int. Cl.: B01D 35/30, F01M 13/04, F02M 37/22, B01D 46/00

(54) **Filterverschlusssystem mit Bajonett**
Filter seal system with bayonet
Système de fermeture de filtre doté d'une baïonnette

(30) Priorität: 27.03.2008 DE 202008004289 U
(43) Veröffentlichungstag der Anmeldung: 14.10.2009
(73) Patentinhaber: Mann + Hummel GmbH, 71638 Ludwigsburg (DE)
(72) Erfinder: Becker, Stefan, 68305 Mannheim (DE); Dworatzek, Klemens, 68535 Edingen (DE); Nguyen, Duc Cuong, 30880 Laatzen (DE); Petschl, Thomas, 58730 Fröndenberg (DE); Münkel, Karlheinz, 75038 Oberderdingen-Flehingen (DE)

(56) Entgegenhaltungen:
- WO-A-01/85306
- DE-A1-102004 029 641

## Beschreibung

### Technisches Gebiet

Die Erfindung betrifft ein Filterverschlusssystem der im Oberbegriff des Anspruchs 1 angegebenen Gattung. Ein solches Filterverschlusssystem dient zum dichten Verbinden eines stirnseitigen Anschlussendes eines kreiszylindrischen Filtergehäuses mit einem mit dem Anschlussende korrespondierenden Anschlusskopf, in den das Anschlussende in einer axialen Steckrichtung einsetzbar bzw. aufsetzbar und durch eine Steck-Dreh-Bewegung formschlüssig mit dem Anschlusskopf verbindbar ist, wobei das Anschlussende und der Anschlusskopf an mindestens einer Verbindungstelle eine Bajonettverbindung aufweisen.

Das Filterverschlusssystem dient zum Herstellen einer druckdichten und/oder gasdichten und/oder flüssigkeitsdichten Verbindung zwischen dem Filtergehäuse und dem Anschlusskopf. Die Erfindung richtet sich gleichermaßen auf Filterverschlusssysteme, die zum einmaligen Montieren eines Filters oder Filtergehäuses vorgesehen sind, wie auch auf solche, bei denen ein Filter oder Filtergehäuse bei Wartungs- oder Instandsetzungsarbeiten regelmäßig ausgewechselt wird.

Ein bevorzugtes Anwendungsgebiet derartiger Filterverschlusssysteme sind stationäre und fahrbare Druckluftanlagen. Die hierfür verwendeten Kompressoren erzeugen einen Druck von bis zu ca. 20 bar, typischerweise etwa 7 bis 8 bar, und benötigen Öl zum Schmieren, Abdichten und Kühlen der sich bewegenden Teile, wodurch ölhaltige Gase entstehen. Es werden pro Kubikmeter Luft ca. 5 Liter Öl in den Schraubenkompressor eingespritzt; das Entölen der Druckluft stellt somit eine wichtige Maßnahme da. Um den größten Teil dieses Öls zurückzugewinnen und die Druckluft von dem Öl zu reinigen, werden Luftentölelemente benutzt, die im Zuge der Wartung der Anlage regelmäßig auszutauschen sind.

Diese Luftentölelemente sind die Filterelemente eines entsprechenden Filters und sind in einem Filtergehäuse untergebracht. Das Filtermedium ist zumeist ein Wickelfilter bzw. Koaleszenzfilter. Bei den Filtern oder den in das Filtergehäuse eingesetzten Filterelementen handelt sich um Wegwerfteile, weil die Filterelemente nicht nur Öl abscheiden, das in den Ölkreislauf der Druckluftanlage zurückgeführt und weiterverwendet wird, sondern sich im Laufe der Zeit durch abgeschiedene Schmutzpartikel zusetzen. Eine ähnliche Anwendung derartiger Luftentölelemente oder Ölabscheider ergibt sich bei Vakuumpumpen.

Andere Anwendungen derartiger Filterverschlusssysteme finden sich in Flüssigkeitsfiltern, die Schmutzpartikel oder andere Bestandteile aus einer Flüssigkeit herausfiltern, z.B. Ölfilter, Kraftstofffilter, Hydraulikflüssigkeitsfilter, Kühlmittelfilter, Wasserabscheider oder Prozessfilter zum Abscheiden großer Schmutzmengen aus Prozessflüssigkeiten, insbesondere bei Schleif-, Erodier- oder Funkenerodierprozessen. Filterverschlusssysteme werden auch in Flüssigkeitsabscheidern eingesetzt, die flüssige oder feste Verunreinigungen aus einem Gasstrom abtrennen, insbesondere bei Brennkraftmaschinen, beispielsweise beim Reinigen von ölhaltigen Entlüftungsgasen aus dem Kurbelgehäuse.

In Bereichen wie der Ölfiltration und Luftentölung muss ein Filterverschlusssystem insbesondere den Anforderungen hinsichtlich Druck- und Temperaturfestigkeit genügen. Wichtige Merkmal sind zumeist auch die einfache, selbsterklärende und Bedienungsfehler ausschließende Handhabbarkeit und die kostengünstige Herstellung und/oder Entsorgung.

### Stand der Technik

Im Stand der Technik haben sich vor allem Filterverschlusssysteme etabliert, die auf Gewindeverbindungen beruhen. Dabei wird ein Filtergehäuse in der Regel mit einem zentral anordneten Gewinde, das sich in einer in das Filtergehäuse eingesetzten Endscheibe befindet, auf einen korrespondierenden Gewindestutzen des Anschlusskopfes aufgeschraubt und mittels eines Dichtmittels, beispielsweise eines O-Rings, eine Dichtung erzielt. Ferner sind auch Bajonettverbindungen bekannt (siehe z.B. DE102004029641).

Ausgehend von diesem Stand der Technik besteht die Aufgabe der Erfindung darin, ein Filterverschlusssystem zu schaffen, bei dem auf einfache Weise eine dichte Verbindung hergestellt werden kann, das eine einfache, selbsterklärende und Bedienungsfehler ausschließende Handhabbarkeit ermöglicht und das in der Herstellung und/oder Entsorgung kostengünstig ist.

Diese Aufgabe wird erfindungsgemäß durch ein Filterverschlusssystem mit den Merkmalen des Anspruchs 1 gelöst. Bevorzugte Ausgestaltungen und Weiterbildungen der Erfindung ergeben sich aus den abhängigen Ansprüchen und der nachfolgenden Beschreibung mit zugehörigen Zeichnungen.

### Offenbarung der Erfindung

Der erfindungsgemäße Filterverschlusssystem zum dichten Verbinden eines stirnseitigen Anschlussendes eines kreiszylindrischen Filtergehäuses mit einem mit dem Anschlussende korrespondierenden Anschlusskopf, in den das Anschlussende in einer axialen Steckrichtung einsetzbar bzw. aufsetzbar und durch eine Steck-Dreh-Bewegung formschlüssig mit dem Anschlusskopf verbindbar ist. Dabei weisen das Anschlussende und der Anschlusskopf an mindestens einer Verbindungsstelle eine Bajonettverbindung auf, die in einem der beiden verbundenen Teile einen im Wesentlichen in einer Ebene senkrecht zur Steckrichtung angeordneten, länglichen, in Umfangsrichtung nicht rundum laufenden, sondern zum Ermöglichen des Ineinandersteckens bzw. Aufsetzens segmentierten, unterbrochenen Aufnahmeschlitz oder eine solche Aufnahmeerhebung aufweist und in dem anderen verbundenen Teil eine mit dem Aufnahmeschlitz bzw. der Aufnahmeerhebung korrespondierende Einsteckerhebung umfasst, die bei geschlossener Bajonettverbindung in den Aufnahmeschlitz eingreift bzw. die Aufnahmeerhebung hintergreift. Das erfindungsgemäße Filterverschlusssystem weist die Besonderheit auf, dass die Bajonettverbindung sowohl mehrere in der Steckrichtung aufeinander folgende Aufnahmeschlitze bzw. Aufnahmeerhebungen, die im Wesentlichen in parallelen Ebenen senkrecht zur Steckrichtung angeordnet sind, als auch mehrere dazu korrespondierende Einsteckerhebungen aufweist.

Vereinfacht ausgedrückt wird ein Filterverschluss vorgeschlagen, der als mehrreihiges Bajonett bezeichnet werden könnte, im Unterschied zum Stand der Technik, aus dem einreihige Bajonette bekannt sind.

Ein erfindungsgemäßes Filterverschlusssystem hat die Vorteile, dass auf eine einfache Weise eine dichte Verbindung hergestellt werden kann, wobei eine einfache, selbsterklärende und Bedienungsfehler ausschließende Handhabbarkeit ermöglicht wird. Ferner kann die Herstellung und/oder Entsorgung kostengünstig erfolgen. Weitere Vorteile der Erfindung sind die große Trag- und Haltekraft der hochfesten Verbindung, die auch mit geringen Montagekräften erzielt wird, eine schnelle Montage- und Demontagemöglichkeit, da im Gegensatz zu gebräuchlichen Aufschraubfiltern nicht mehrere Umdrehungen des Filters für das Auf- oder Abschrauben erforderlich sind, die Anwendbarkeit des Verschlusssystems auf engstem Raum und zu niedrigen Kosten und die Realisierbarkeit für die Entsorgung verbrauchter Filter vorteilhafter metallfreier Ausführungen der Filter einschließlich Filtergehäuse, Filterelement und Verschluss.

Mit der Erfindung können metallfreie Filter hergestellt werden, weil im Gegensatz zum Stand der Technik keine stabile, d.h. aus Metall gefertigte stirnseitige Filterendscheibe mit einem zentralen Gewinde erforderlich ist, um den Aufschraubfilter fest auf einen Gewindedorn des Anschlusskopfes aufzuschrauben. Daher kann die Filterendscheibe erheblich schwächer ausgebildet werden, also dünner und/oder in Kunststoff. Dies liegt daran, dass der Kraftfluss zwischen dem Filtergehäuse und dem Anschlusskopf, das heißt die Krafteinleitung zwischen diesen beiden Teilen zum Herstellen der mechanischen Verbindung mit einem mehrreihigen, weiter außen am Filtergehäuse liegenden Bajonett besser ist als bei einem zentralen Gewinde. Somit kann der gesamte Filter, umfassend das Filtergehäuse und ein darin angeordnetes Filterelement sowie die stirnseitige Filterendscheibe, metallfrei ausgebildet sein.

Ein weiterer Vorteil ergibt sich bei metallfreien Ausführungsformen dadurch, dass KunststofFteile in der Fertigung unaufwendiger mit hoher Reinheit hergestellt werden können als Metallteile. Metallteile weisen Rückstände in Form von Spänen, Öl und Schweißablagerungen auf, die in einer aufwendigen Reinigung entfernt werden müssen, wobei die Gefahr besteht, dass Rückstände verbleiben. Kunststoffteile können dagegen im Spritzgussverfahren ohne derartige Rückstände mit großer Sauberkeit hergestellt werden.

Ein weiterer Vorteil des erfindungsgemäßen Verschlusssystems besteht darin, dass durch die außenseitige Bajonettverbindung die stirnseitige Filterendscheibe frei für das Zuführen und Abführen der Fluide gestaltet werden kann. Dadurch lassen sich die Strömungsverhältnisse in dem Filter und die Abscheidung des Filters verbessern sowie der Druckverlust vermindern.

Erfindungsgemäß ist ein Filterverschlusssystem zum dichten Verbinden eines stirnseitigen Anschlussendes eines kreiszylindrischen Filtergehäuses mit einem mit dem Anschlussende korrespondierenden Anschlusskopf. In den Anschlusskopf ist das Anschlussende in einer axialen Steckrichtung einsetzbar bzw. aufsetzbar und durch eine Steck-Dreh-Bewegung formschlüssig mit dem Anschlusskopf verbindbar ist. Das Anschlussende und der Anschlusskopf weisen an mindestens einer Verbindungsstelle eine Bajonettverbindung auf. Die Bajonettverbindung weist in einem der beiden verbundenen Teile einen im Wesentlichen in einer Ebene senkrecht zur Steckrichtung angeordneten, länglichen, in Umfangsrichtung nicht rundum laufenden, sondern zum Ermöglichen des Ineinandersteckens bzw. Aufsetzens segmentierten, unterbrochenen Aufnahmeschlitz oder eine solche Aufnahmeerhebung auf. In dem anderen verbundenen Teil umfasst die Bajonettverbindung eine mit dem Aufnahmeschlitz bzw. der Aufnahmeerhebung korrespondierende Einsteckerhebung. Die Einsteckerhebung greift bei geschlossener Bajonettverbindung in den Aufnahmeschlitz ein bzw. hintergreift die Aufnahmeerhebung. Die Bajonettverbindung weist dabei sowohl mehrere in der Steckrichtung aufeinander folgende Aufnahmeschlitze bzw. Aufnahmeerhebungen auf, die im Wesentlichen in parallelen Ebenen senkrecht zur Steckrichtung angeordnet sind, als auch mehrere dazu korrespondierende Einsteckerhebungen.

In einer Ausführungsform sind die Einsteckerhebungen länglich, sich in Umfangsrichtung des Filtergehäuses bzw. des Anschlusskopfes erstreckend und durch eine Segmentierung unterbrochen ausgebildet.

In einer Ausführungsform beträgt die Anzahl in einer Ebene senkrecht zur Steckrichtung entlang des Umfangs des Filtergehäuses oder des Anschlusskopfes hintereinander folgend angeordneter Einsteckerhebungen zwischen zwei und zehn, bevorzugt zwischen drei und fünf.

In einer Ausführungsform beträgt die Gesamtlänge der in einer Ebene senkrecht zur Steckrichtung entlang des Umfangs des Filtergehäuses oder des Anschlusskopfes hintereinander folgend angeordneten Einsteckerhebungen zwischen 5% und 90%, bevorzugt zwischen 10% und 80% und besonders bevorzugt zwischen 30% und 70% des Umfangs des Filtergehäuses bzw. des Anschlusskopfes.

In einer Ausführungsform sind die Aufnahmeschlitze bzw. Aufnahmeerhebungen und die Einsteckerhebungen exakt in einer Ebene senkrecht zur Steckrichtung angeordnet. Die Aufnahmeschlitze bzw. Aufnahmeerhebungen und die Einsteckerhebungen können auch leicht schräg zu der Ebene senkrecht zur Steckrichtung angeordnet sein. Z.B. können die Aufnahmeschlitze bzw. Aufnahmeerhebungen und die Einsteckerhebungen mit einer positiven Steigung angeordnet sein, so dass sich bei der Drehbewegung beim Schließen des Bajonettverschlusses der Abstand des Filtergehäuses zu dem Anschlusskopf verringert. Alternativ können die Aufnahmeschlitze bzw. Aufnahmeerhebungen und die Einsteckerhebungen mit einer negativen Steigung angeordnet sein, so dass sich bei der Drehbewegung beim Schließen des Bajonettverschlusses der Abstand des Filtergehäuses zu dem Anschlusskopf vergrößert.

In einer Ausführungsform sind die Aufnahmeschlitze, Aufnahmeerhebungen oder die Einsteckerhebungen an ihrem jeweils zueinander zugewandten Ende, an dem bei der Steck-Dreh-Bewegung beim Schließen des Bajonettverschlusses der erste Eingriff ineinander erfolgt, angeschrägt, um des Ansetzen des Bajonettverschlusses zu erleichtern.

Die Anzahl der Ebenen senkrecht zur Steckrichtung, in denen zueinander parallel angeordnete Aufnahmeschlitze, Aufnahmeerhebungen oder Einsteckerhebungen angeordnet sind, beträgt zwischen drei und neun und bevorzugt zwischen vier und sieben.

Der erfindungsgemässe Bajonettverschluss ist mittels sich relativ zueinander unterscheidender Abstände der Ebenen senkrecht zur Steckrichtung, in denen zueinander parallele Aufnahmeschlitze, Aufnahmeerhebungen oder Einsteckerhebungen angeordnet sind, kodiert.

In einer Ausführungsform ist der Bajonettverschluss mittels der Anzahl der Ebenen senkrecht zur Steckrichtung, in denen zueinander parallele Aufnahmeschlitze, Aufnahmeerhebungen oder Einsteckerhebungen angeordnet sind, kodiert.

In einer Ausführungsform ist der Bajonettverschluss mittels der Länge und/oder der Teilung der unterbrochenen Segmentierung der Aufnahmeschlitze, Aufnahmeerhebungen oder Einsteckerhebungen kodiert.

In einer Ausführungsform ist der Bajonettverschluss mittels der Breite der Aufnahmeschlitze, Aufnahmeerhebungen oder Einsteckerhebungen kodiert.

In einer Ausführungsform ist der Bajonettverschluss mittels der Tiefe und/oder Höhe der Aufnahmeschlitze, Aufnahmeerhebungen oder Einsteckerhebungen kodiert ist.

In einer Ausführungsform ist das Anschlussende radial außenliegend zu dem Anschlusskopf angeordnet, so dass das Anschlussende den Anschlusskopf radial von außen übergreift.

In einer Ausführungsform ist das Anschlussende radial innenliegend zu dem Anschlusskopf angeordnet, so dass der Anschlusskopf das Anschlussende radial von außen übergreift.

In einer Ausführungsform weist das Filterverschlusssystem einen Anschlag gegen Überdrehen des Bajonettverschlusses auf.

In einer Ausführungsform ist der Bajonettverschlusses derart ausgebildet, dass er nicht oder nur mit erhöhtem Kraftaufwand geöffnet werden kann, wenn das Filtergehäuse unter einem Innendruck steht.

In einer Ausführungsform weist das Filterverschlusssystem eine Sicherungseinrichtung oder Verriegelungseinrichtung zum Sichern des geschlossenen Bajonettverschlusses auf, insbesondere gegen selbsttätiges Lösen durch Vibration oder durch eine Fehlbedienung auf.

In einer Ausführungsform umfasst die Sicherungs- bzw. Verriegelungseinrichtung ein mechanisches Rastsystem, das den Bajonettverschluss mechanisch gegen Aufdrehen sichert.

In einer Ausführungsform nimmt die Sicherungs- bzw. Verriegelungseinrichtung beim Schließen des Bajonettverschlusses selbsttätig die gesicherte Stellung ein.

In einer Ausführungsform umfasst das mechanische Rastsystem einen Zapfen, bevorzugt einen in radialer Richtung betätigbaren oder wirkenden Zapfen, einen Druckstift, eine Rastnase an einem Aufnahmeschlitz, einer Aufnahmeerhebung oder einer Einsteckerhebung, ein Schnappelement, einen Blockierstift oder eine Hinterschneidung.

In einer Ausführungsform sichert bzw. verriegelt die Sicherungs- bzw. Vierriegelungseinrichtung selbsttätig den Bajonettverschluss, sobald das Filtergehäuse unter Innendruck steht.

In einer Ausführungsform weist die Sicherungs- bzw. Verriegelungseinrichtung einen elektronischen oder elektrischen Signalgeber zum automatischen Abschalten der Druckerzeugung und/oder zum Druckentlasten des Filtergehäuses auf, der ein entsprechendes Signal abgibt, sobald der Bajonettverschluss geöffnet wird.

In einer Ausführungsform ist das Filtergehäuse und/oder ein darin angeordnetes Filterelement, metallfrei ausgebildet.

Erfindungsgemäß ist ein Filtergehäuse mit einem erfindungsgemäßen Bajonettverschluss für ein Filterverschlusssystem.

Erfindungsgemäß ist ein Filter, umfassend ein Filtergehäuse und ein Filterelement in dem Filtergehäuse, mit einem erfindungsgemäßen Bajonettverschluss für ein Filterverschlusssystem.

Erfindungsgemäß ist eine Druckluftanlage zum Erzeugen von Druckluft, die einen Anschlusskopf mit einem erfindungsgemäßen Bajonettverschluss für ein Filterverschlusssystem aufweist.

Erfindungsgemäß ist eine Brennkraftmaschine, die einen Anschlusskopf mit einem erfindungsgemäßen Bajonettverschluss für ein Filterverschlusssystem aufweist.

### Kurze Beschreibung der Zeichnungen

Die Erfindung wird nachfolgend anhand in den Figuren dargestellter Ausführungsbeispiele näher erläutert. Die darin beschriebenen Besonderheiten können einzeln oder in Kombination miteinander eingesetzt werden, um bevorzugte Ausgestaltungen der Erfindung zu schaffen. In den Zeichnungen zeigen:
- Fig. 1: eine teilgeschnittene perspektivische Ansicht eines Filters nach dem Stand der Technik auf einem Anschlusskopf,
- Fig. 2: eine perspektivische Ansicht eines erfindungsgemäßen Filters mit einem Anschlusskopf vor der Montage des Filters auf den Ansch lusskopf,
- Fig. 3: eine Ansicht zu Figur 2 nach der Montage,
- Fig. 4: einen Schnitt A-A zu Fig. 3,
- Fig. 5: einen Schnitt B-B zu Fig. 4,
- Fig. 6: eine perspektivische Teilansicht eines erfindungsgemäßen Versch lusssystems,
- Fig. 7: das Anschlussende von Fig. 6 und
- Fig. 8: den Anschlusskopf von Fig. 6.

### Ausführungsform(en) der Erfindung

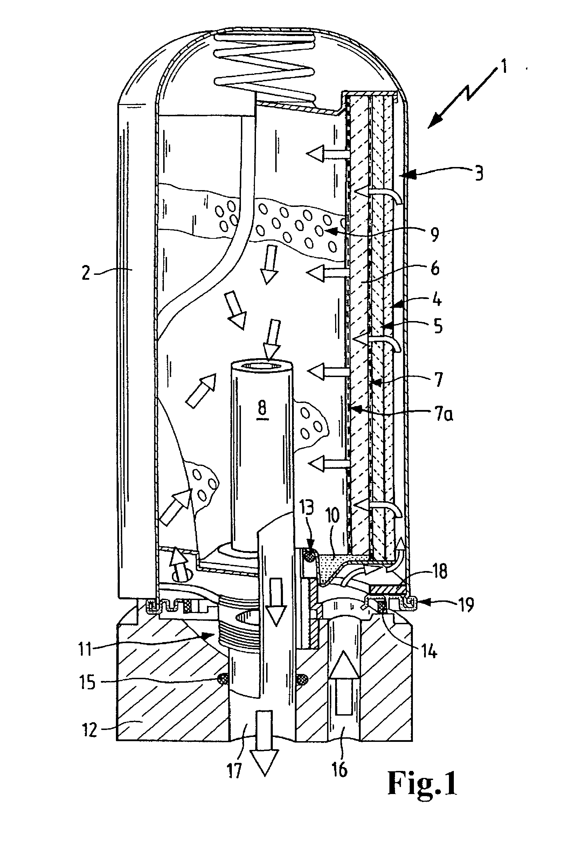

Die Figur 1 zeigt einen Filter 1 nach dem Stand der Technik, der als Anschraubfilter, so genannter Spin-On-Filter als Ölabscheider in einer Anlage zum Erzeugen von Druckluft dient. Der Filter 1 umfasst ein druckfestes, kreiszylindrisches Filtergehäuse 2, das aus Kunststoff oder Metall besteht und als Filterbecher oder Filtertopf ausgebildet ist. In dem Filtergehäuse 2 befindet sich ein Filterelement 3, das radial von außen nach innen durchströmt wird und dabei das Öl abscheidet. In dem dargestellten Ausführungsbeispiel umfasst das Filterelement 3 einen Vorabscheider 4, einen Feinabscheider 5 und einen Nachabscheider 6.

Ferner befinden sich in dem Filter 1 zwei druckstabile Stützrohre 7, 7a und ein Entnahmestutzen 8, der für eine räumliche Trennung der Entnahmestellen für die entölte Druckluft 9 und das abgeschiedene Öl 10 sorgt. Das abgeschiedene Öl 10 dräniert in dem Filter 1 in einen Ölsumpf, wird durch einen Dränageanschluss abgesaugt und in den Ölkreislauf der Druckluftanlage zurückgeführt. Der Dränageanschluss zum Entnehmen des abgeschiedenen Öls 10 aus dem Ölsumpf ist nicht dargestellt

Der Filter 1 wird über einen zentralen axialen Anschraubnippel 11 mit einem Anschlusskopf 12 der Druckluftanlage dichtend verbunden. Für die radiale und axiale Abdichtung sorgen dabei drei Dichtungen in Form der O-Ringe 13, 14, 15. Eine oder mehrere, insbesondere die Dichtung 14, kann als Rechteckprofildichtung ausgebildet sein. Der Anschlusskopf 12 weist einen Auslass 16 für das zu reinigende Luft-Öl-Gemisch auf, das über eine entsprechende Öffnung in den Filter 1 eintritt und das Filterelement 3 radial von außen nach innen durchströmt, sowie einen Einlass 17. Durch den Entnahmestutzen 8 wird aus dem Filter 1 entnommene entölte Druckluft über Auslass 16 in die Druckluftanlage zurück geführt wird.

Das stirnseitige Ende des Filtergehäuses 2 wird durch eine stabile, in Metall ausgebildete Filterendscheibe 18 gebildet, die durch eine Bördelung 19 mit dem Filtergehäuse 2 verbunden ist.

Bei dem in Figur 1 dargestellten Filter 1 handelt es sich um eine so genannte stehende Variante, bei der der Filter 1 über dem Anschlusskopf 12 angeordnet ist. Die umgekehrte Ausführungsform, bei der der Filter 1 unter dem Anschlusskopf 12 angeordnet ist, wird als hängende Variante bezeichnet. Sie unterscheidet sich im Wesentlichen dadurch, dass sie eine den Filter 1 in axialer Länge durchziehende Leitung zum Absaugen des Ölsumpfes beinhaltet.

In manchen Ausführungsformen kann vorgesehen sein, beim Filterwechsei nur das Filterelement 3 auszutauschen und das Filtergehäuse 2 wieder zu verwenden. In anderen Ausführungsformen bilden das Filtergehäuse 2 und das darin eingesetzte Filterelement 3 eine Einheit, die ein gemeinsames Wegwerfteil darstellt.

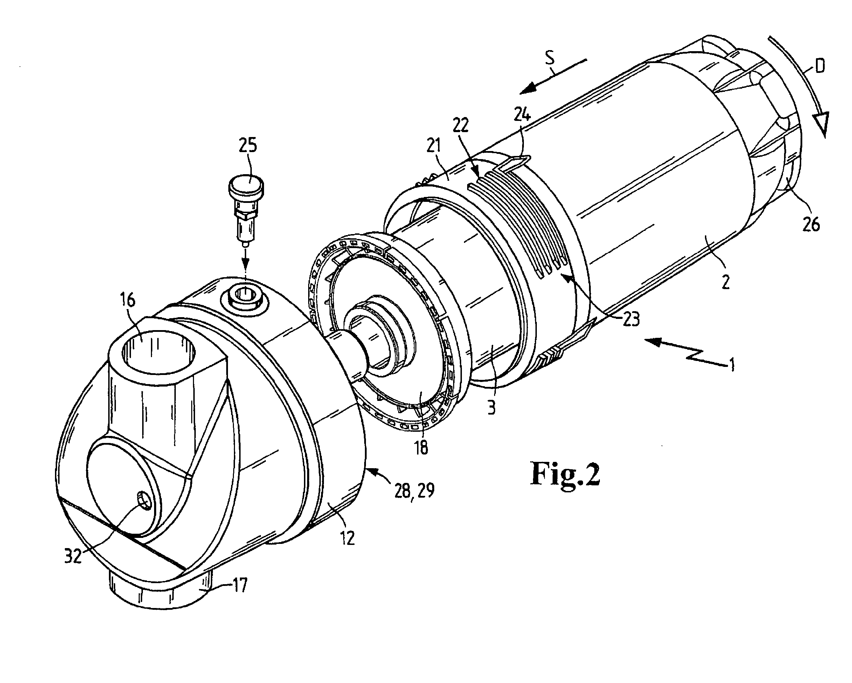

In Figur 2 ist ein erfindungsgemäßer Filter 1 dargestellt, der sich im Wesentlichen durch das Filterverschlusssystem zum dichten Verbinden des stirnseitigen Anschlussendes 21 mit einem mit dem Anschlussende 21 korrespondierenden Anschlusskopf 12 unterscheidet. Dabei können das Filterelement 3 und die Filterendscheibe 18 anders gestaltet werden.

Das Filtergehäuse 2 ist in einer axialen Steckrichtung S in den Anschlusskopf 12 einsetzbar bzw. aufsetzbar und kann durch eine Steck-Dreh-Bewegung formschlüssig mit dem Anschlusskopf 12 verbunden werden. Die Drehrichtung D zum Montieren des Filtergehäuses 2 ist durch einen Pfeil dargestellt. Das Anschlussende 21 und der Anschlusskopf 12 weisen an mindestens einer Verbindungsstelle eine Bajonettverbindung auf, die in einem der beiden verbundenen Teile, das im dargestellten Ausführungsbeispiel der Anschlusskopf 12 ist, einen im Wesentlichen in einer Ebene senkrecht zur Steckrichtung S angeordneten, länglichen, in Umfangsrichtung nicht rundum laufenden, sondern zum Ermöglichen des Ineinandersteckens bzw. Aufsetzens segmentierten, unterbrochenen Aufnahmeschlitz oder eine solche Aufnahmeerhebung aufweist.

Das andere verbundene Teil, das in dem dargestellten Ausführungsbeispiel von Figur 2 das Filtergehäuse 2 ist, umfasst eine mit dem Aufnahmeschlitz bzw. der Aufnahmeerhebung korrespondierende Einsteckerhebung 22, die bei geschlossener Bajonettverbindung in den Aufnahmeschlitz eingreift bzw. die Aufnahmeerhebung hintergreift. Die erfindungsgemäße Ausführungsform des Filterverschlusssystems weist die Besonderheit auf, dass die Bajonettverbindung sowohl mehrere in der Steckrichtung S aufeinander folgende Aufnahmeschlitze bzw. Aufnahmeerhebungen, die im Wesentlichen in parallelen Ebenen senkrecht zur Steckrichtung S angeordnet sind, als auch mehrere dazu korrespondierende Einsteckerhebungen 22 aufweist. Das Verschlusssystem ist also ein mehrreihiges Bajonett, das eine Rippenstruktur mit mehreren parallelen Rippen umfasst, die von parallelen Einsteckerhebungen 22 und korrespondierenden Aufnahmeschlitzen bzw. Aufnahmeerhebungen gebildet werden.

Die Einsteckerhebungen 22 sind länglich, das heißt sich in Umfangsrichtung des Filtergehäuses 2 bzw. des Anschlusskopfes 12 erstreckend und durch eine Segmentierung unterbrochen ausgebildet. Die Anzahl der in einer Ebene senkrecht zur Steckrichtung S entlang des Umfangs des Filtergehäuses 2 oder des Anschlusskopfes 12 hintereinander folgend angeordneter Einsteckerhebungen 22 kann vorteilhafterweise zwischen zwei und zehn, bevorzugt zwischen drei und fünf betragen. Die Gesamtlänge der in einer Ebene senkrecht zur Steckrichtung S entlang des Umfangs des Filtergehäuses 2 oder des Anschlusskopfes 12 hintereinander folgend angeordneten Einsteckerhebungen 22 beträgt vorteilhafterweise zwischen 5% und 90%, bevorzugt zwischen 10% und 80% und besonders bevorzugt zwischen 30% und 70% des Umfangs des Filtergehäuses 2 bzw. des Anschlusskopfes 12.

Bei dem in Figur 2 dargestellten Ausführungsbeispiel ist das Anschlussende 21 radial innenliegend zu dem Anschlusskopf 12 angeordnet, so dass der Anschlusskopf das Anschlussende 21 radial von außen übergreift. Diese Ausführungsform ist bevorzugt, weil dabei die Verbindungs-, Klebe oder Schweißnähte in dem Filter 1 bzw. der Filterendscheibe 18 einer günstigeren Druckbelastung ausgesetzt sind und weil der Innendruck in dem Filtergehäuse 2 radial nach außen über das Anschlussende 21 von dem massiven Anschlusskopf 12 aufgenommen werden kann.

Die umgekehrte Ausführungsform, bei der das Anschlussende 21 radial außenliegend zu dem Anschlusskopf 12 angeordnet ist, so dass das Anschlussende 21 den Anschlusskopf 12 radial von außen übergreift ist natürlich auch realisierbar. In diesem Fall sind die Einsteckerhebungen 22 nicht auf der Außenseite des Filterendes 21 sondern auf dessen Innenseite angeordnet und die korrespondierenden Aufnahmeschlitze oder Aufnahmeerhebungen auf der Außenseite statt der Innenseite des Anschusskopfes 12. Das Anschlussende 21 des Filtergehäuses 2 ist in diesem Fall etwas fester auszubilden, um der Druckbelastung stand zu halten, oder durch ein zusätzliches Sicherungselement beispielsweise in Form einer das Anschlussende 21 von außen übergreifenden Überwurfmutter oder Steckmuffe zu sichern.

Zum Verbinden des Filters 1 mit dem Anschlusskopf 12 wird das Filtergehäuse 2 in Steckrichtung S in den Anschlusskopf 12 eingeführt und danach durch Drehen des Filtergehäuses 2 in der Drehrichtung D gedreht. Durch das Drehen greifen die mehreren parallelen Reihen der Einsteckerhebungen 22 an dem Anschlussende 21 in die mehreren parallelen Reihen von Aufnahmeschlitzen oder Aufnahmeerhebungen in den Anschlusskopf 12 ein. Dadurch wird die Bajonettverbindung geschlossen und der Filter 1 sitzt fest auf bzw. in dem Aufnahmekopf 12. Ergänzend zu dieser mechanischen Verbindung sind Dichtelemente vorhanden, beispielsweise O-Ringe, Dichtlippen oder Dichtringe, die eine druckdichte Abdichtung bewirken.

Zum Lösen des Filters 1 von dem Aufnahmekopf 12 wird das Filtergehäuse 2 entgegen der Drehrichtung D gedreht und anschließend entgegen der Steckrichtung S von dem Anschlusskopf 12 abgezogen. Der Winkel, um den das Filtergehäuse 2 zum Schließen bzw. Öffnen der Bajonettverbindung gedreht werden muss, hängt von der Länge der Einsteckerhebungen und der korrespondierenden Aufnahmeschlitze bzw. Aufnahmeerhebungen ab und kann beispielsweise zwischen 5° und 180°, bevorzugt zwischen 10° und 150° und besonders bevorzugt zwischen 45° und 120° betragen.

Die Aufnahmeschlitze bzw. Aufnahmeerhebungen und die Einsteckerhebungen 22 können exakt in einer Ebene senkrecht zur Steckrichtung S angeordnet sein. Dadurch wird beim Drehen des Filtergehäuses 2 in der Drehrichtung D kein Hub des Filtergehäuses 2 in oder entgegen der Steckrichtung S erzeugt. In anderen Ausführungsformen können die Aufnahmeschlitze bzw. die Aufnahmeerhebungen und die Einsteckerhebungen 22 aber auch leicht schräg zu der Ebene senkrecht zur Steckrichtung S angeordnet sein, so dass sich beim Drehen des Filtergehäuses 2 in der Drehrichtung D ein Hub des Filtergehäuses 2 in oder entgegen der Steckrichtung S ergibt, ähnlich wie beim Ein- oder Ausdrehen einer Schraube mit einem Gewinde.

Gemäß einer ersten Ausführungsform sind dabei die Aufnahmeschlitze bzw. Aufnahmeerhebungen und die Einsteckerhebungen 22 mit einer positiven Steigung angeordnet, so dass sich bei der Drehbewegung beim Schließen des Bajonettverschlusses der Abstand des Filtergehäuses 2 zu dem Anschlusskopf 12 verringert. Durch eine solche leicht schräge positive Steigung der Rippen des Bajonettverschlusses erhöht sich beim Montieren des Filtergehäuses 2 der Anpressdruck, ähnlich zu dem Einschrauben einer Schraube in ein Gewinde, was günstig für das Erzielen druckdicht geschlossener Dichtungselemente sein kann.

In anderen Ausführungsformen kann auch vorgesehen sein, dass die Aufnahmeschlitze bzw. Aufnahmeerhebungen und die Einsteckerhebungen 22 mit einer negativen Steigung angeordnet sind, so dass sich bei der Drehbewegung beim Schließen des Bajonettverschlusses der Abstand des Filtergehäuses 2 zu dem Anschlusskopf 12 vergrößert. Dies hat entsprechend zur Folge, dass beim Drehen des Filtergehäuses 2 entgegen der Drehrichtung D sich der Abstand des Filtergehäuses 2 zu dem Anschlusskopf 12 verkleinert. Eine leicht schräge negative Steigung in den Rippen des Bajonettverschlusses bewirkt somit in Verbindung mit den elastischen, in axialer Richtung wirkenden Dichtelementen zwischen Filtergehäuse 2 und Anschlusskopf 12, dass beim Lösen des Filters 1 eine mit der Rückdrehbewegung progressiv zunehmender Kraftaufwand erforderlich ist, was einem selbsttätigen Öffnen des Verschlusses, beispielsweise durch Vibrationen, entgegenwirkt.

Um das Ansetzen des Bajonettverschlusses zu erleichtern, kann vorgesehen sein, dass die Aufnahmeschlitze, Aufnahmeerhebungen oder die Einsteckerhebungen 22 an ihrem jeweils zueinander zugewandten Ende, an dem bei der Steck-Dreh-Bewegung beim Schließen des Bajonettverschlusses der erste Eingriff ineinander erfolgt, eine Anschrägung 23 aufweisen.

Um zu vermeiden, dass der Bajonettverschluss beim Montieren des Filters 1 überdreht wird, kann ein Anschlag 24 vorgesehen sein, der den maximalen Drehwinkel in Drehrichtung D nach dem Einführen des Anschlussendes 21 in der Steckrichtung S begrenzt. Gemäß einem weiteren vorteilhaften Merkmal kann vorgesehen sein, dass der Bajonettverschluss derart ausgebildet ist, dass er nicht oder nur mit erhöhtem Kraftaufwand geöffnet werden kann, wenn das Filtergehäuse 2 unter einem Innendruck steht. Dies kann beispielsweise durch selbsthemmende Ausbildung der Einsteckerhebungen 22 und der korrespondierenden Aufnahmeschlitze bzw. Aufnahmeerhebungen oder eine entsprechende Gestaltung dieser Elemente mit Hinterschneidungen oder Rastnasen, Rastnocken oder Rastvertiefungen, die es erforderlich machen, zur Demontage des Filters 1 das Filtergehäuse 2 zunächst ein wenig in Steckrichtung S zu drücken, bevor es in entgegen der Drehrichtung D gedreht werden kann, realisiert werden.

Alternativ oder zusätzlich kann der erfindungsgemäße Bajonettverschluss auch eine Sicherungseinrichtung oder Verriegelungseinrichtung zum Sichern des geschlossenen Bajonettverschlusses, insbesondere gegen selbsttätiges Lösen durch Vibration oder durch eine Fehlbedienung, aufweisen. Die Sicherungs- bzw. Verriegelungseinrichtung verhindert also ein versehentliches oder selbstständiges Lösen oder Öffnen des Bajonettverschlusses. Eine solche Sicherungs- bzw. Verriegelungseinrichtung kann beispielsweise ein mechanisches Rastsystem umfassen, das den Bajonettverschluss mechanisch gegen Aufdrehen entgegen der Drehrichtung D sichert. Eine Sicherungs- bzw. Verriegelungseinrichtung ist dabei vorteilhafterweise so ausgebildet, dass sie beim Schließen des Bajonettverschlusses selbsttätig die gesicherte Stellung einnimmt, ohne dass die Sicherung manuell aktiviert werden muss. Dadurch werden Bedienungsfehler vermieden.

Ein mechanisches Rastsystem kann beispielsweise einen Druckstift, eine Rastnase an einem Aufnahmeschlitz, einer Aufnahmeerhebung oder einer Einsteckerhebung 22, ein Schnappelement, einen Blockierstift oder eine Hinterschneidung, die beispielsweise nur durch eine Drück-Zurückdreh-Bewegung, bei der zum Öffnen des Bajonettverschlusses das Filtergehäuse zunächst etwas in Steckrichtung S gedrückt werden muss, bevor er entgegen der Drehrichtung D gedreht werden kann, umfassen. Ferner kann die Sicherungs- bzw. Verriegelungseinrichtung auch so gestaltet sein, dass sie den Bajonettverschluss sichert bzw. verriegelt, sobald das Filtergehäuse 2 unter Innendruck steht.

Eine Sicherungs- bzw. Verriegelungseinrichtung kann auch einen elektronischen oder elektrischen Signalgeber zum automatischen Abschalten der Druckerzeugung und/oder zum Druckentlasten des Filtergehäuses 2 aufweisen, der ein entsprechendes Signal abgibt, sobald der Bajonettverschluss geöffnet wird.

In Figur 2 ist die Sicherungs- bzw. Verriegelungseinrichtung durch einen Zapfen 25 realisiert, der in radialer Richtung betätigbar ist und wirkt. Er ist in den Anschlusskopf 12 eingesetzt und wird unter Federvorspannung auf das Anschlussende 21 gedrückt, wo er einen entsprechenden Rastnocken des Anschlussendes 21 hintergreift, wenn der Bajonettverschluss in Drehrichtung D geschlossen wird (nicht dargestellt). Zum Abnehmen des Filters 1 muss daher zunächst der Zapfen 25 entgegen seiner Federvorspannung zurückgezogen werden um dadurch das Zurückdrehen des Filtergehäuses 2 entgegen der Drehrichtung D zu ermöglichen.

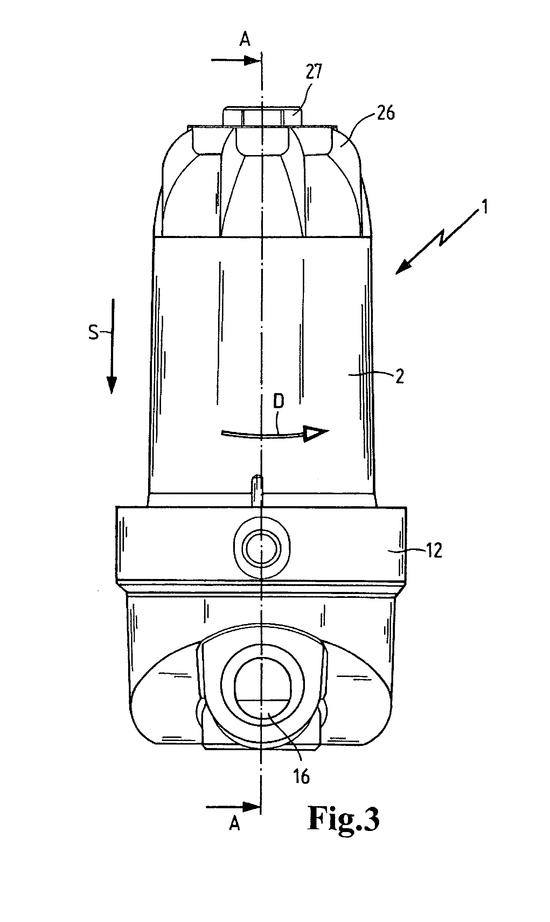

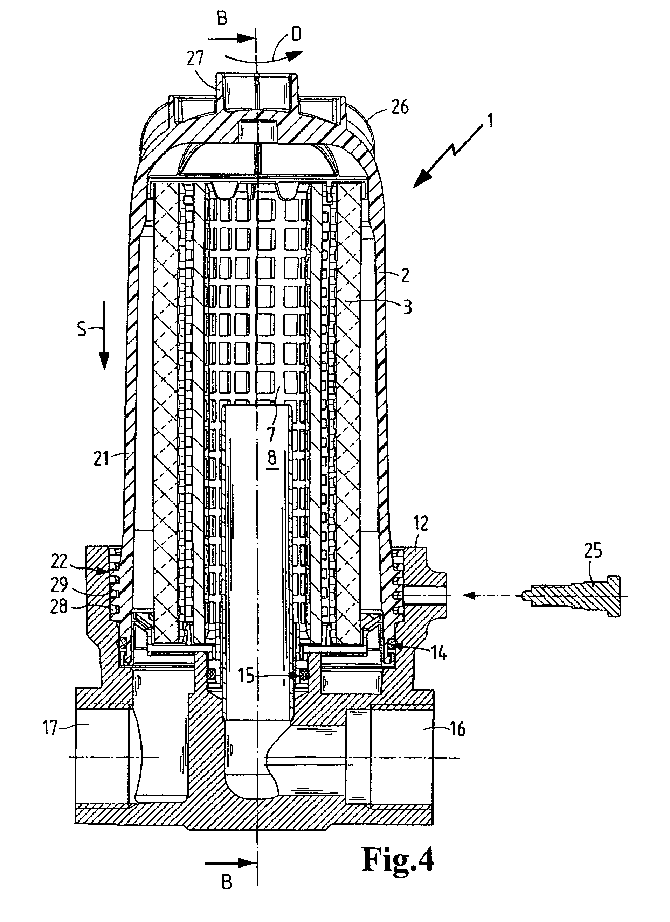

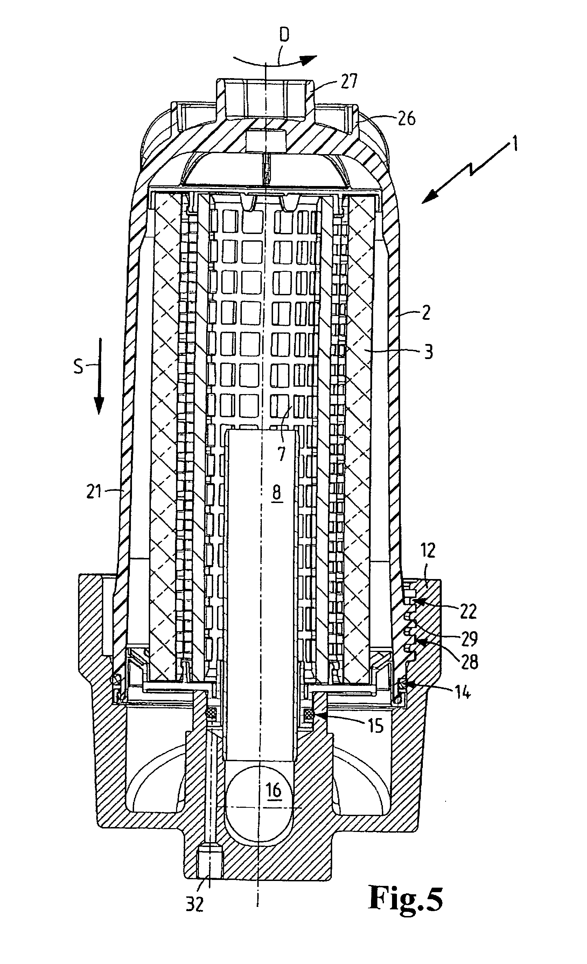

Die Figuren 3 bis 5 zeigen eine Ansicht und zwei Längsschnitte des Filters 1 von Figur 2 nach der Montage, das heißt bei geschlossenem Bajonettverschluss. Zum Erleichtern der Montage oder Demontage weist das Filtergehäuse 2 ein GrifFteil 26 oder einen Werkzeugansatz 27, beispielsweise für einen Innen- oder Außensechskant auf. In Figur 5 ist der Drainageanschluss 32 zu erkennen.

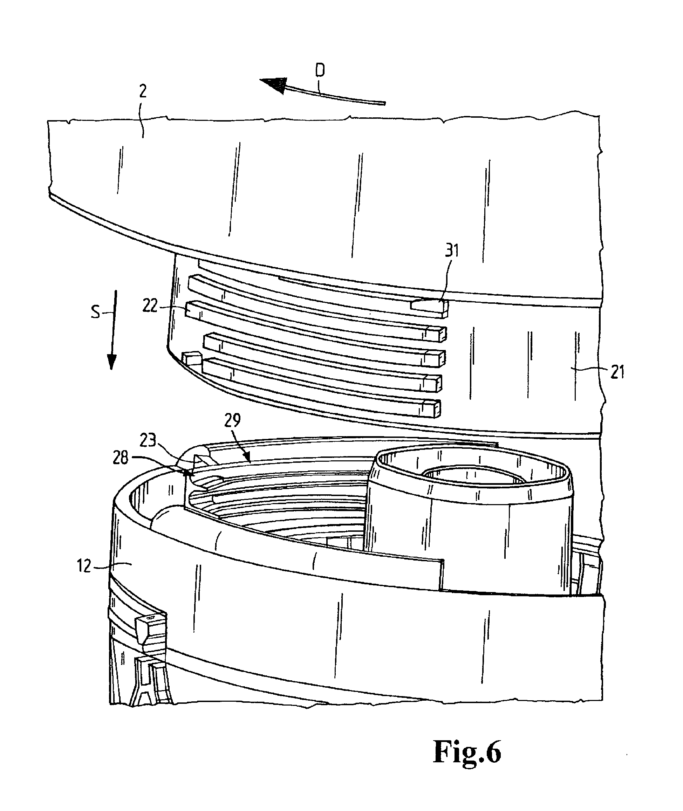

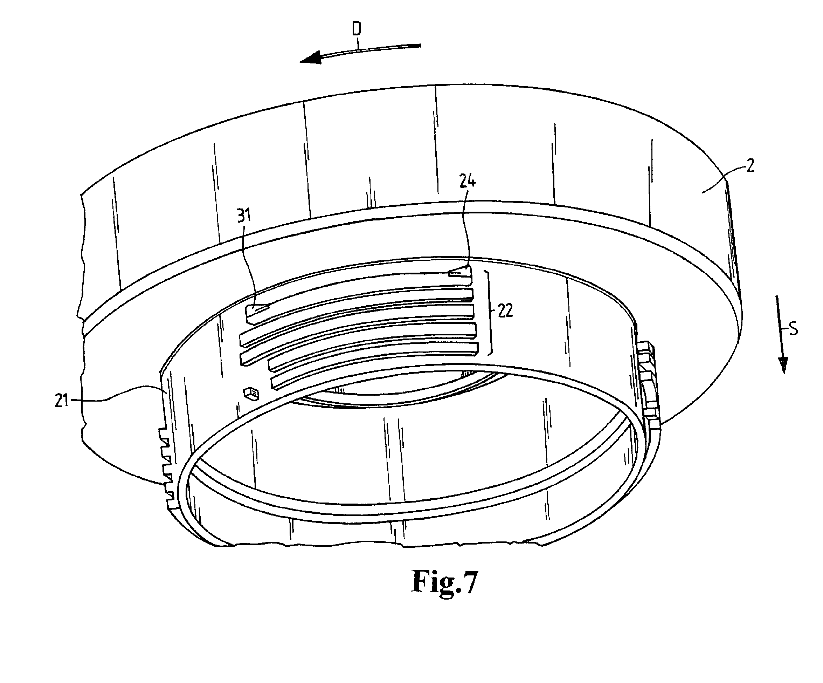

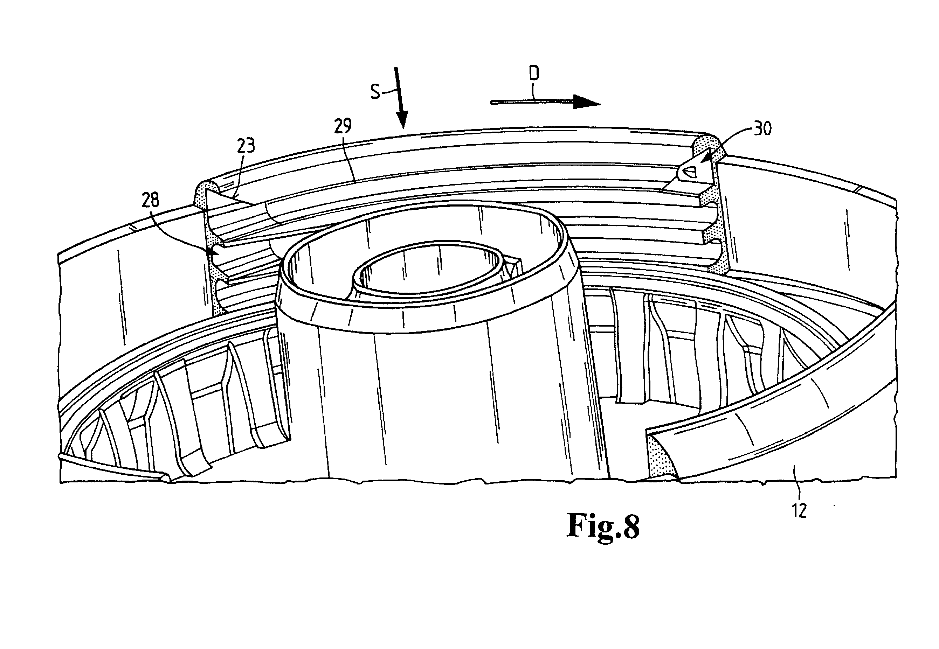

Die Figuren 6 bis 8 zeigen eine perspektivische Teilansicht einer abgewandelten Ausführungsform eines erfindungsgemäßen mehrreihigen Bajonettverschlusses. In Figur 6 sind das Anschlussende 21 und der Anschlusskopf 12 dargestellt, in Figur 7 das Anschlussende 21 und in Figur 8 der Anschlusskopf 12. In den Figuren sind nicht nur die Einsteckerhebungen 22, sondern auch die korrespondierende Aufnahmeschlitze 28 bzw. Aufnahmeerhebungen 29 zu erkennen. In Abwandlung von der Ausführungsform gemäß Figur 2 ist hier die Drehrichtung D zum Schließen des Bajonettverschlusses rechts- statt linksdrehend und die Anschrägung 23 zum Erleichtern des Ansetzens des Bajonettverschlusses befindet sich nicht auf den Einsteckerhebungen 22, sondern auf den Aufnahmeschlitzen 28 bzw. Aufnahmeerhebungen 29. Der Anschlag 24 wird durch eine Nocke am Ende einer Einsteckerhebung 22 gebildet, die ein Weiterdrehen des Anschlussendes 21 verhindert. Das mechanische Rastsystem zum Sichern des geschlossenen Bajonettverschlusses umfasst eine Raste 30 und eine Nocke 31.

Die Anzahl der Ebenen senkrecht zur Steckrichtung S, in denen zueinander parallel angeordnete Aufnahmeschlitze 28, Aufnahmeerhebungen 29 oder Einsteckerhebungen 22 angeordnet sind, das heißt die Anzahl der Reihen paralleler Rippen des Bajonettverschlusses, beträgt vorteilhafterweise zwischen zwei und zwölf, bevorzugt zwischen drei und neun und besonders bevorzugt zwischen vier und sieben. In dem Ausführungsbeispiel von Figur 2 sind vier und in dem Ausführungsbeispiel von Figur 6 fünf solche parallelen Ebenen bzw. Reihen gewählt.

Die Ebenen senkrecht zur Steckrichtung S, in denen zueinander parallel angeordnete Aufnahmeschlitze 28, Aufnahmeerhebungen 29 oder Einsteckerhebungen 22 angeordnet sind, können im Wesentlichen den gleichen Abstand zueinander aufweisen. Um zu gewährleisten, dass nur bestimmte Filter 1 auf bestimmte Anschlussköpfe 12 passen und dadurch das Anschließen eines falschen oder ungeeigneten Filters 1 an einen Anschlusskopf 12 zu vermeiden, was Schäden oder sogar Gefahren zur Folge haben kann, kann der Bajonettverschluss auch kodiert sein. Das Kodieren macht ein Verwechseln ähnlicher Filtertypen durch eine produktbezogene Ausführung der Bajonett-Rippen, die beispielsweise in Höhe, Breite, Länge und Anzahl variiert werden, unmöglich, was eine große Anzahl unverwechselbarer Kombinationen ergibt. Durch Variation der Anzahl und Segmentierung der Bajonett-Rippen kann auch die Tragkraft des Bajonettverschlusses variiert werden.

Die Kodierung des Bajonettverschlusses kann beispielsweise durch folgende Maßnahmen erfolgen: a) mittels sich relativ zueinander unterscheidender Abstände und/oder der Anzahl der Ebenen senkrecht zur Steckrichtung S, in denen zueinander parallele Aufnahmeschlitze 28, Aufnahmeerhebungen 29 oder Einsteckerhebungen 22 angeordnet sind. b) mittels der Länge und/oder der Teilung der unterbrochenen Segmentierung der Aufnahmeschlitze 28, Aufnahmeerhebungen 29 oder Einsteckerhebungen 22. c) mittels der Breite (gemessen in axialer Richtung) oder der Tiefe bzw. Höhe (gemessen in radialer Richtung) der Aufnahmeschlitze 28, Aufnahmeerhebungen 29 oder Einsteckerhebungen 22.

Ein weiterer Vorteil des erfindungsgemäßen Verschlusssystems, insbesondere in der Realisierung kundenspezifischer und/oder kodierter Ausführungen, besteht darin, dass das Filtergehäuse 2 bzw. das Anschlussende 21 in Kunststoff gefertigt werden kann, beispielsweise durch Spritzgießen, wobei insbesondere die Verwendung von Kurzglasfasern oder Langglasfasern für hochfeste Materialien, die den Anforderungen hinsichtlich Druck, Temperatur und mechanischer Festigkeit genügen, bevorzugt ist. Durch segmentierte bzw. modulare Ausführung des Spritzgusswerkzeugs lässt sich rein durch das Auswechseln der bajonettformenden Backen des Werkzeugs eine neue Produktvariante erzeugen, ohne dass ein drehendes Entformen wie bei Gewinden erforderlich ist. Durch die segmentierte Ausführung des Werkzeugs lassen sich aus einem Basiswerkzeug in modularer Weise verschiedene Varianten erzeugen. Die Herstellungskosten für eine Serie unterschiedlicher Bajonettanschlüsse sind aufgrund der reduzierten Werkzeugkosten erheblich vermindert.

Das beschriebene Verschlusssystem mit einem mehrreihigen Bajonettverschluss kann nicht nur zum dichten Verbinden von Filtern mit einem Anschlusskopf dienen, sondern eignet sich prinzipiell zur Herstellung jeder Art mechanischer Verbindung, mit oder ohne Dichtungsfunktion, insbesondere wenn Teile auf engem Raum kostengünstig und hochfest miteinander verbunden werden sollen. Solche Verbindungen können beispielsweise Verbindungen von runden Gehäusehälften oder Rohrleitungen sein.

## Patentansprüche

1. Filterverschlusssystem, umfassend ein kreiszylindrisches Filtergehäuse (2) mit einem stirnseitigen Anschlussende (21) und einem Anschlusskopf (12), zum dichten Verbinden des stirnseitigen Anschlussendes (21) des kreiszylindrischen Filtergehäuses (2) mit dem Anschlusskopf (12), wobei der Anschlusskopf (12) mit dem Anschlussende (21) korrespondiert, wobei das Anschlussende (21) durch eine Steck-Dreh-Bewegung formschlüssig mit dem Anschlusskopf (12) verbindbar ist, wobei das Anschlussende (21) und der Anschlusskopf (12) an mindestens einer Verbindungsstelle eine Bajonettverbindung aufweisen, die in einem der beiden verbundenen Teile einen im Wesentlichen in einer Ebene senkrecht zur Steckrichtung (S) angeordneten, länglichen, in Umfangsrichtung nicht rundum laufenden, sondern zum Ermöglichen des Ineinandersteckens bzw. Aufsetzens segmentierten, unterbrochenen Aufnahmeschlitz (28) oder eine solche Aufnahmeerhebung (29) aufweist und in dem anderen verbundenen Teil eine mit dem Aufnahmeschlitz (28) bzw. der Aufnahmeerhebung (29) korrespondierende Einsteckerhebung (22) umfasst, die bei geschlossener Bajonettverbindung in den Aufnahmeschlitz (28) eingreift bzw. die Aufnahmeerhebung (29) hintergreift, wobei die Bajonettverbindung sowohl mehrere in der Steckrichtung (S) aufeinander folgende Aufnahmeschlitze (28) bzw. Aufnahmeerhebungen (29), die im Wesentlichen in parallelen Ebenen senkrecht zur Steckrichtung (S) angeordnet sind, als auch mehrere dazu korrespondierende Einsteckerhebungen (22) aufweist, **dadurch gekennzeichnet, dass** das Anschlussende (21) in den Anschlusskopf (12) in einer axialen Steckrichtung (5) einsetzbar ist und der Bajonettverschluss mittels sich relativ zueinander unterscheidender Abstände der Ebenen senkrecht zur Steckrichtung (S), in denen zueinander parallele Aufnahmeschlitze (28), Aufnahmeerhebungen (29) oder Einsteckerhebungen (22) angeordnet sind, kodiert ist, wobei die Anzahl der Ebenen senkrecht zur Steckrichtung (S), in denen zueinander parallel angeordnete Einsteckerhebungen (22) angeordnet sind, zwischen drei und neun beträgt.

2. Filterverschlusssystem nach dem vorhergehenden Anspruch, **dadurch gekennzeichnet, dass** die Einsteckerhebungen (22) länglich, sich in Umfangsrichtung des Filtergehäuses (2) bzw. des Anschlusskopfes (12) erstreckend und durch eine Segmentierung unterbrochen ausgebildet sind.

3. Filterverschlusssystem nach einem der vorhergehenden Ansprüche, **dadurch gekennzeichnet, dass** die Anzahl in einer Ebene senkrecht zur Steckrichtung (S) entlang des Umfangs des Filtergehäuses (2) oder des Anschlusskopfes (12) hintereinander folgend angeordneter Einsteckerhebungen (22) zwischen zwei und zehn, bevorzugt zwischen drei und fünf beträgt.

4. Filterverschlusssystem nach einem der vorhergehenden Ansprüche, **dadurch gekennzeichnet, dass** die Aufnahmeschlitze (28) bzw. Aufnahmeerhebungen (29) und die Einsteckerhebungen (22) in einer Ebene senkrecht zur Steckrichtung (S) angeordnet sind.

5. Filterverschlusssystem nach einem Ansprüche 1 bis 3, **dadurch gekennzeichnet, dass** die Aufnahmeschlitze (28) bzw. Aufnahmeerhebungen (29) und die Einsteckerhebungen (22) leicht schräg zu der Ebene senkrecht zur Steckrichtung (S) angeordnet sind, wobei die Aufnahmeschlitze (28) bzw. Aufnahmeerhebungen (29) und die Einsteckerhebungen (22) mit einer positiven Steigung angeordnet sein können, so dass sich bei der Drehbewegung beim Schließen des Bajonettverschlusses der Abstand des Filtergehäuses (2) zu dem Anschlusskopf (12) verringert oder die Aufnahmeschlitze (28) bzw. Aufnahmeerhebungen (29) und die Einsteckerhebungen (22) mit einer negativen Steigung angeordnet sein können, so dass sich bei der Drehbewegung beim Schließen des Bajonettverschlusses der Abstand des Filtergehäuses (2) zu dem Anschlusskopf (12) vergrößert.

6. Filterverschlusssystem nach einem der vorhergehenden Ansprüche, **dadurch gekennzeichnet, dass** die Anzahl der Ebenen senkrecht zur Steckrichtung (S), in denen zueinander parallel angeordnete Aufnahmeschlitze (28), Aufnahmeerhebungen (29) oder Einsteckerhebungen (22) angeordnet sind, zwischen vier und sieben beträgt.

7. Filterverschlusssystem nach einem der vorhergehenden Ansprüche, **dadurch gekennzeichnet, dass** der Bajonettverschluss zusätzlich mittels der Anzahl der Ebenen senkrecht zur Steckrichtung (S), in denen zueinander parallele Aufnahmeschlitze (28), Aufnahmeerhebungen (29) oder Einsteckerhebungen (22) angeordnet sind; und/oder mittels der Länge und/oder der Teilung der unterbrochenen Segmentierung der Aufnahmeschlitze (28), Aufnahmeerhebungen (29) oder Einsteckerhebungen (22); und/oder mittels der Breite und/oder mittels der Tiefe und/oder mittels der Höhe der Aufnahmeschlitze (28), Aufnahmeerhebungen (29) oder Einsteckerhebungen (22), kodiert ist.

8. Filterverschlusssystem nach einem der vorhergehenden Ansprüche, **dadurch gekennzeichnet, dass** das Anschlussende (21) radial außenliegend zu dem Anschlusskopf (12) angeordnet ist, so dass das Anschlussende (21) den Anschlusskopf (12) radial von außen übergreift oder das Anschlussende (21) radial innenliegend zu dem Anschlusskopf (12) angeordnet ist, so dass der Anschlusskopf (12) das Anschlussende (21) radial von außen übergreift.

9. Filterverschlusssystem nach einem der vorhergehenden Ansprüche, **dadurch gekennzeichnet, dass** das es einen Anschlag (24) gegen Überdrehen des Bajonettverschlusses aufweist.

10. Filterverschlusssystem nach einem der vorhergehenden Ansprüche, **dadurch gekennzeichnet, dass** es eine Sicherungseinrichtung oder Verriegelungseinrichtung zum Sichern des geschlossenen Bajonettverschlusses, insbesondere gegen selbsttätiges Lösen durch Vibration oder durch eine Fehlbedienung aufweist, z.B. mit einem mechanischen Rastsystem, das gegen Aufdrehen sichert.

11. Filterverschlusssystem nach dem vorhergehenden Anspruch, **dadurch gekennzeichnet, dass** die Sicherungs- bzw. Verriegelungseinrichtung beim Schließen des Bajonettverschlusses selbsttätig die gesicherte Stellung einnimmt.

12. Filterverschlusssystem nach einem der Ansprüche 10 bis 11, **dadurch gekennzeichnet, dass** die Sicherungs- bzw. Verriegelungseinrichtung selbsttätig den Bajonettverschluss sichert bzw. verriegelt, sobald das Filtergehäuse (2) unter Innendruck steht und/oder einen elektronischen oder elektrischen Signalgeber zum automatischen Abschalten der Druckerzeugung und/oder zum Druckentlasten des Filtergehäuses aufweist, der ein entsprechendes Signal abgibt, sobald der Bajonettverschluss geöffnet wird.

13. Filtergehäuse (2) eines Filters (1), **dadurch gekennzeichnet, dass** es ein Filterverschlusssystem nach einem der vorhergehenden Ansprüche aufweist.

14. Filter (1), umfassend ein Filtergehäuse (2) und ein Filterelement (3) in dem Filtergehäuse (2), **dadurch gekennzeichnet, dass** er ein Filterverschlusssystem nach einem der vorhergehenden Ansprüche aufweist.

15. Brennkraftmaschine oder Druckluftanlage zum Erzeugen von Druckluft, **dadurch gekennzeichnet, dass** sie einen Anschlusskopf (12) mit einem Filterverschlusssystem nach einem der Ansprüche 1 bis 13 oder einen Filter (1) nach Anspruch 14 aufweist.

## Claims

1. Filter closing system, comprising a circular cylindrical filter housing (2) with a frontal connecting end (21) and a connecting head (12), for tightly connecting the frontal connecting end (21) of the circular cylindrical filter housing (2) with the connecting head (12), the connecting head (12) corresponding with the connecting end (21), the connecting end (21) being connectable with the connecting head (12) in a positive fitting by means of a pushing and rotating movement, the connecting end (21) and the connecting head (12) featuring at at least one connection point a bayonet connection which features in one of the two connected parts an elongated receiving slot (28) disposed substantially in a plane perpendicular to the insertion direction (S), not completely running around in circumferential direction, but segmented and interrupted for allowing the connection with each other or the mounting, or such a receiving projection (29), and which comprises in the other connected part an insertion projection (22) corresponding with the receiving slot (28) and/or the receiving projection (29) which engages the receiving slot (28) and/or engages behind the receiving projection (29) when the bayonet connection is closed, the bayonet connection featuring several, in the insertion direction (S) consecutive receiving slots (28) and/or receiving projections (29) which are substantially disposed in parallel planes perpendicular to the insertion direction (S) as well as several insertion projections (22) corresponding thereto, **characterized in that** the connecting end (21) is insertable into the connecting head (12) in an axial insertion direction (5), and that the bayonet coupling is encoded by means of distances differing relative to each other between the planes perpendicular to the insertion direction (S), in which receiving slots (28), receiving projections (29) or insertion projections (22) are disposed parallel to each other, the number of planes perpendicular to the insertion direction (S), in which insertion projections (22) are disposed parallel to each other, being between three and nine.

2. Filter closing system according to the above claim, **characterized in that** the insertion projections (22) are elongated, extending in circumferential direction of the filter housing (2) and/or the connecting head (12), and interrupted by a segmentation.

3. Filter closing system according to one of the above claims, **characterized in that** the number of insertion projections (22) arranged one after the other in a plane perpendicular to the insertion direction (S) along the circumference of the filter housing (2) or the connecting head (12) is between two and ten, preferably between three and five.

4. Filter closing system according to one of the above claims, **characterized in that** the receiving slots (28) and/or the receiving projections (29) and the insertion projections (22) are disposed in a plane perpendicular to the insertion direction (S).

5. Filter closing system according to one of the claims 1 to 3, **characterized in that** the receiving slots (28) and/or the receiving projections (29) and the insertion projections (22) are disposed slightly inclined in relation to the plane perpendicular to the insertion direction (S), the receiving slots (28) and/or the receiving projections (29) and the insertion projections (22) being able to be arranged with a positive incline so that the distance between the filter housing (2) and the connecting head (12) is reduced when the bayonet coupling is closed by means of the rotating movement, or the receiving slots (28) and/or the receiving projections (29) and the insertion projections (22) being able to be arranged with a negative incline so that the distance between the filter housing (2) and the connecting head (12) is increased when the bayonet coupling is closed by means of the rotating movement.

6. Filter closing system according to one of the above claims, **characterized in that** the number of planes perpendicular to the insertion direction (S), in which are disposed receiving slots (28), receiving projections (29) or insertion projections (22) arranged parallel to each other, is between four and seven.

7. Filter closing system according to one of the above claims, **characterized in that** the bayonet coupling is additionally encoded by means of the number of planes perpendicular to the insertion direction (S), in which are disposed receiving slots (28), receiving projections (29) or insertion projections (22) arranged parallel to each other; and/or by means of the length and/or the partition of the interrupted segmentation of the receiving slots (28), the receiving projections (29) or the insertion projections (22); and/or by means of the width and/or by means of the depth and/or by means of the height of the receiving slots (28), the receiving projections (29) or the insertion projections (22).

8. Filter closing system according to one of the above claims, **characterized in that** the connecting end (21) is disposed radially outside in relation to the connecting head (12) so that the connecting end (21) overlaps the connecting head (12) radially from the outside, or that the connecting end (21) is disposed radially inside in relation to the connecting head (12) so that the connecting head (12) overlaps the connecting end (21) radially from the outside.

9. Filter closing system according to one of the above claims, **characterized in that** it features a stop (24) against overtightening of the bayonet coupling.

10. Filter closing system according to one of the above claims, **characterized in that** it features a safety device or an interlocking device for securing the closed bayonet coupling, in particular against self-loosening by vibration or by an operating error, e.g. with a mechanical locking system that secures against unscrewing.

11. Filter closing system according to the previous claim, **characterized in that** the safety device or interlocking device automatically takes a secured position when the bayonet coupling is closed.

12. Filter closing system according to one of the claims 10 to 11, **characterized in that** the safety device or interlocking device secures and/or locks the bayonet coupling automatically as soon as the filter housing (2) is under internal pressure and/or features an electronic or electrical signal transmitter for automatically switching off the generation of pressure and/or for depressurizing the filter housing which emits a corresponding signal as soon as the bayonet coupling is opened.

13. Filter housing (2) of a filter (1), **characterized in that** it features a filter closing system according to one of the above claims.

14. Filter (1) comprising a filter housing (2) and a filter element (3) in the filter housing (2), **characterized in that** it features a filter closing system according to one of the above claims.

15. Internal combustion engine or compressed air system for generating compressed air, **characterized in that** it features a connecting head (12) with a filter closing system according to one of the claims 1 to 13 or a filter (1) according to claim 14.

## Revendications

1. Système de fermeture de filtre, comprenant un boîtier de filtre cylindrique circulaire (2) avec une extrémité de raccord frontale (21) et une tête de raccord (12), destiné à relier de manière étanche l'extrémité de raccord frontale (21) du boîtier de filtre cylindrique circulaire (2) à la tête de raccord (12), la tête de raccord (12) correspondant avec l'extrémité de raccord (21), l'extrémité de raccord (21) pouvant être reliée par crabotage à la tête de raccord (12) par un mouvement d'emboîtement et de rotation, l'extrémité de raccord (21) et la tête de raccord (12) présentant à au moins un point de jonction un raccord à baïonnette, lequel raccord présente dans l'une des deux parties reliées une fente de montage (28) disposée essentiellement sur un plan perpendiculaire au sens d'emboîtement (S), longitudinale, n'évoluant pas sur tout le pourtour en sens circonférentiel, mais étant segmentée et interrompue afin d'autoriser l'emboîtement ou le montage, ou présente une telle saillie de montage (29), et comprenant également dans l'autre partie reliée une saillie d'emboîtement (22) correspondant avec la fente de montage (28) et/ou la saillie de montage (29) et se mettant en prise, lorsque le raccord à baïonnette est fermé, dans la fente de montage (28) et/ou derrière la saillie de montage (29), le raccord à baïonnette présentant à la fois plusieurs fentes de montage (28) et/ou saillies de montage (29) successives dans le sens d'emboîtement (S) qui sont essentiellement disposées sur des plans parallèles perpendiculaires au d'emboîtement (S), et plusieurs saillies d'emboîtement (22) correspondantes, **caractérisé en ce que** l'extrémité de raccord (21) peut être insérée dans la tête de raccord (12) dans un sens d'emboîtement axial (5) et que le raccord à baïonnette est codé au moyen des distances différentes par rapport des unes aux autres entre les plans perpendiculaires au sens d'emboîtement (S), sur lesquels sont disposées des fentes de montage (28), des saillies de montage (29) ou des saillies d'emboîtement (22) parallèles les unes aux autres, le nombre de plans perpendiculaires au sens d'emboîtement (S) sur lesquels des saillies d'emboîtement (22) parallèles les unes aux autres sont disposées étant compris entre trois et neuf.

2. Système de fermeture de filtre selon la revendication précédente, **caractérisé en ce que** les saillies d'emboîtement (22) s'étendent longitudinalement en sens circonférentiel du boîtier de filtre (2) et/ou de la tête de raccord (12) et sont interrompues par une segmentation.

3. Système de fermeture de filtre selon l'une des revendications précédentes, **caractérisé en ce que** le nombre de saillies d'emboîtement (22) disposées les unes après les autres sur un plan perpendiculaire au sens d'emboîtement (S), le long de la circonférence du boîtier de filtre (2) ou de la tête de raccord (12), est compris entre deux et dix, de préférence entre trois et cinq.

4. Système de fermeture de filtre selon l'une des revendications précédentes, **caractérisé en ce que** les fentes de montage (28) et/ou les saillies de montage (29) et les saillies d'emboîtement (22) sont disposées sur un plan perpendiculaire au sens d'emboîtement (S).

5. Système de fermeture de filtre selon l'une des revendications 1 à 3, **caractérisé en ce que** les fentes de montage (28) et/ou les saillies de montage (29) et les saillies d'emboîtement (22) sont disposées de manière légèrement inclinée par rapport au plan perpendiculaire au sens d'emboîtement (S), les fentes de montage (28) et/ou les saillies de montage (29) et les saillies d'emboîtement (22) pouvant être inclinées selon une pente positive de sorte que, durant la rotation effectuée lors de la fermeture du raccord à baïonnette, la distance entre le boîtier de filtre (2) et la tête de raccord (12) diminue, ou bien les fentes de montage (28) et/ou les saillies de montage (29) et les saillies d'emboîtement (22) pouvant être inclinées selon une pente négative de sorte que, durant le mouvement de rotation effectué lors de la fermeture du raccord à baïonnette, la distance entre le boîtier de filtre (2) et la tête de raccord (12) augmente.

6. Système de fermeture de filtre selon l'une des revendications précédentes, **caractérisé en ce que** le nombre de plans perpendiculaires au sens d'emboîtement (S) sur lesquels sont disposées des fentes de montage (28), des saillies de montage (29) ou des saillies d'emboîtement (22) parallèles les unes aux autres est compris entre quatre et sept.

7. Système de fermeture de filtre selon l'une des revendications précédentes, **caractérisé en ce que** le raccord à baïonnette est également codé au moyen du nombre de plans perpendiculaires au sens d'emboîtement (S) sur lesquels sont disposées des fentes de montage (28), des saillies de montage (29) ou des saillies d'emboîtement (22) parallèles les unes aux autres ; et/ou au moyen de la longueur et/ou de la graduation de la segmentation interrompue des fentes de montage (28), des saillies de montage (29) ou des saillies d'emboîtement (22) ; et/ou au moyen de la largeur et/ou au moyen de la profondeur et/ou au moyen de la hauteur des fentes de montage (28), des saillies de montage (29) ou des saillies d'emboîtement (22).

8. Système de fermeture de filtre selon l'une des revendications précédentes, **caractérisé en ce que** l'extrémité de raccord (21) est disposée en sens radial, à l'extérieur, par rapport à la tête de raccord (12) de sorte que l'extrémité de raccord (21) chevauche la tête de raccord (12) en sens radial de l'extérieur, ou bien que l'extrémité de raccord (21) est disposée en sens radial, à l'intérieur, par rapport à la tête de raccord (12) de sorte que la tête de raccord (12) chevauche l'extrémité de raccord (21) en sens radial de l'extérieur.

9. Système de fermeture de filtre selon l'une des revendications précédentes, **caractérisé en ce que** ce système présente une butée (24) évitant que le raccord à baïonnette ne tourne démesurément.

10. Système de fermeture de filtre selon l'une des revendications précédentes, **caractérisé en ce que** ce système présente un dispositif de sécurité ou un dispositif de verrouillage destiné à sécuriser le raccord à baïonnette fermé, notamment en vue d'éviter que ce raccord ne se desserre inopinément en raison de vibrations ou d'une mauvaise manipulation, p. ex. avec un système d'arrêt mécanique évitant le desserrage.

11. Système de fermeture de filtre selon la revendication précédente, **caractérisé en ce que** le dispositif de sécurité ou dispositif de verrouillage se met en position sécurisée lors de la fermeture du raccord à baïonnette.

12. Système de fermeture de filtre selon l'une des revendications 10 à 11, **caractérisé en ce que** le dispositif de sécurité ou dispositif de verrouillage sécurise et/ou verrouille automatiquement le raccord à baïonnette dès que le boîtier de filtre (2) est soumis à une pression intérieure et/ou présente un transmetteur de signaux électronique ou électrique destiné à désactiver automatiquement la génération de la pression et/ou à détendre le boîtier de filtre et émettant un signal correspondant dès que le raccord à baïonnette s'ouvre.

13. Boîtier de filtre (2) d'un filtre (1), **caractérisé en ce que** ce boîtier présente un système de fermeture de filtre selon l'une des revendications précédentes.

14. Filtre (1), comprenant un boîtier de filtre (2) et un élément filtrant (3) dans le boîtier de filtre (2), **caractérisé en ce que** ce filtre présente un système de fermeture de filtre selon l'une des revendications précédentes.

15. Moteur à combustion interne ou installation à air comprimé destiné/ée à générer de l'air comprimé, caractérisé/ée en ce qu'il/elle présente une tête de raccord (12) avec un système de fermeture de filtre selon l'une des revendications 1 à 13 ou un filtre (1) selon la revendication 14.
